# EUROPEAN PATENT APPLICATION

(11) **EP 2 187 139 A1**
(43) Date of publication of application: **19.05.2010**
(21) Application number: 08828166.2
(22) Date of filing: 28.08.2008
(51) Int. Cl.: F24F 1/00

(54) **INDOOR MACHINE FOR AIR CONDITIONER**

(30) Priority: 28.08.2007 JP 2007221619; 29.11.2007 JP 2007309155
(71) Applicant: Toshiba Carrier Corporation, Tokyo 108-8580 (JP)
(72) Inventor: FUJITA, Shinobu, Fuji-shi, Shizuoka-ken 416-8521 (JP); WATABIKI, Oserojoin, Fuji-shi, Shizuoka-ken 416-8521 (JP); IDE, Shinichi, Fuji-shi, Shizuoka-ken 416-8521 (JP); OZAWA, Tetsuro, Fuji-shi, Shizuoka-ken 416-8521 (JP); SUZUKI, Hideto, Fuji-shi, Shizuoka-ken 416-8521 (JP); OOTSUBO, Shigeyoshi, Fuji-shi, Shizuoka-ken 416-8521 (JP); GOTO, Kenichi, Fuji-shi, Shizuoka-ken 416-8521 (JP)
(74) Representative: Grosse, Rainer
(86) International application number: PCT/JP2008/065462
(87) International publication number: WO 2009/028634

(57) **Abstract**

An indoor unit of an air conditioner of the invention includes a negative ion generator (M), which is disposed in a suction ventilation path (17) for suctioning indoor air, constituted of a negative ion electrode (25) and an opposite electrode (26), and negatively charges dust D contained in the indoor air circulating in the suction ventilation path (17), an air filter (18) disposed on the upstream side of the suction ventilation path (17) of the negative ion generator (M), and a heat exchanger (8) disposed on the downstream side of the suction ventilation path of the negative ion generator (M). The heat exchanger (8) has an electroconductivity and is used as an opposite electrode of the negative ion generator (M) to be subjected to application of ground potential, and thus, to trap and collect the negatively charged dust, whereby a high dust collecting performance can be obtained. The negative ion electrode (25) and the opposite electrode (26) are free from adhesion of the dusts, resulting in maintenance-free operation, whereby the user inconvenience can be reduced.

## Description

### Technical Field

The present invention relates to an indoor unit of an air conditioner having, in a suction ventilation path for suctioning indoor air, an electric dust collecting function of trapping and collecting dust contained in the indoor air.

### Background Art

An indoor unit constituting an air conditioner includes a heat exchanger. The heat exchanger exchanges heat by circulating indoor air therein to obtain the air conditioning effect. However, recently, there has been widely used an air conditioner having the air conditioning effect and an electric dust collecting function, which is an additional function of positively trapping and removing impurities contained in indoor air.

Namely, the indoor air contains extremely fine dust, pollen, and germs (hereinafter referred to as "dust"). It is said that inhalation of such dust causes hay fever and allergies. Further, accumulation of the dust in a room causes generation of ticks. Thus, it is very effective to remove the dust contained in the indoor air by an indoor unit and clean the air.

The dust collecting apparatus disclosed in Jpn. Pat. Appln. KOKAI Publication No. 2005-224759 includes negative ion generating means which charges dusts contained in air, and a discharge electrode for negatively charging is disposed on the downstream side of the flow of air to the opposite electrode which is a ground electrode. It is described that this precipitator, which has an electrode and an outline configuration having the negative ion generating function and an air cleaning function, is optimally mounted in the indoor unit of an air conditioner.

### Disclosure of Invention

However, the conventional electric dust collectors including the technique disclosed in Jpn. Pat. Appln. KOKAI Publication No. 2005-224759 electrically trap and collect dust contained in air, and therefore, the collected dust is adhered and accumulated on a dust collecting part and a charging part constituting the electric dust collector with the passage of operation time. If the accumulated dust remains untouched, reduction of the dust collecting function, generation of unpleasant noise, or spark discharge may occur.

Accordingly, periodical maintenance by a user is required. However, since most indoor units of an air conditioner are wall-mounted types, they are attached to a high position of a wall. Therefore, it may be difficult for some users to perform maintenance of the indoor unit, and some users cannot perform maintenance at all.

The present invention has been made in view of the above circumstances, and an object of the invention is to provide an indoor unit of an air conditioner. Specifically, in this indoor unit, a negative ion electrode is disposed between an air filter and a heat exchanger. The heat exchanger has a function of trapping and collecting dust charged by the negative ion electrode, and the air filter and the heat exchanger trap the dust, whereby a high dust collecting performance is obtained. The dust is not adhered to the negative ion electrode, resulting in so-called maintenance-free operation, whereby the user inconvenience can be reduced.

In order to achieve the above object, in the indoor unit of an air conditioner of the invention, dust contained in indoor air circulating in a suction ventilation path is negatively charged by a negative ion generator provided with the negative ion electrode to which a high voltage negative potential is applied, the air filter is disposed on the upstream side of the suction ventilation path of the negative ion generator, and the heat exchanger is disposed on the downstream side of the suction ventilation path of the negative ion generator. The heat exchanger has an electroconductivity for the purpose of trapping and collecting the negatively charged dust and is used as an opposite electrode of the negative ion generator to be subjected to application of a ground potential.

### Brief Description of Drawings

FIG. 1 is a cross-sectional view schematically showing an indoor unit of an air conditioner according to an embodiment of the invention.
FIG. 2 is a front view of an indoor unit body incorporated in the indoor unit of an air conditioner when a front panel is detached from the indoor unit.
FIG. 3 is a cross-sectional view of a negative ion generator and the periphery incorporated in the indoor unit body.
FIG. 4 is an exploded perspective view of the negative ion generator.
FIG. 5 is a view for explaining a dust collecting operation in the negative ion generator.
FIG. 6A is a view for explaining an opposite electrode, having a structure different from that of a negative ion electrode incorporated in the negative ion generator.
FIG. 6B is a view for explaining an opposite electrode, having a structure different from that of the negative ion electrode.
FIG. 7A is an upper view of the indoor unit body for explaining the arrangement of the negative ion generator.
FIG. 7B is a front view of the indoor unit body for explaining the arrangement of the negative ion generator.
FIG. 8A is an upper view of the indoor unit body for explaining the arrangement of the negative ion generator according to another example.
FIG. 8B is a front view of the indoor unit body for explaining the arrangement of the negative ion generator according to another example.
FIG. 9 is an explanatory view showing an emission state of negative ions when the negative ion generator is disposed as shown in FIG. 7A.
FIG. 10 is an explanatory view showing an emission state of negative ions when the negative ion generator is disposed as shown in FIG. 8A.
FIG. 11 is a view for explaining the dimensional configuration of the negative ion electrode and the opposite electrode.
FIG. 12 is a characteristic view showing a relationship between the ratio of an interval between needle tips to the entire length of a needle electrode incorporated in the negative ion electrode and a dust collecting performance.
FIG. 13 is an explanatory view showing such a state that dust is trapped by an air filter incorporated in the indoor unit body.
FIG. 14 is an explanatory view showing such a state that dust is trapped by the air filter in another example.
FIG. 15 is a characteristic view showing an ozone concentration versus a measurement time according to the indoor unit body.
FIG. 16 is a cross-sectional view schematically showing an indoor unit of an air conditioner according to another embodiment of the invention.
FIG. 17 is an explanatory view showing the dust collecting operation in the indoor unit.
FIG. 18 is an explanatory view showing the dust collecting operation in the indoor unit according to another embodiment of the invention.
FIG. 19A is a plan view showing arrangement of the negative ion electrode with respect to the heat exchanger and the air filter incorporated in the indoor unit.
FIG. 19B is a side elevation view of the arrangement of the negative ion electrode with respect to the heat exchanger and the air filter.
FIG. 20 is an explanatory view showing such a state that dust is trapped by the air filter.
FIG. 21 is an explanatory view showing such a state that dust is trapped by the air filter in another example.
FIG. 22A is an explanatory view showing the dimensions and shape of the negative ion electrode and the opposite electrode.
FIG. 22B is an explanatory view showing the arrangement posture and specific arrangement dimensions of the negative ion electrode with respect to the heat exchanger and the air filter.
FIG. 23 is an explanatory view showing the dimensions and shape of the negative ion electrode.
FIG. 24 is a characteristic view of the ozone concentration relative to the measurement time in the indoor unit.
FIG. 25A is an exploded perspective view showing the negative ion electrode and an electrode cover.
FIG. 25B is a partial front view showing such a state that the negative ion electrode is mounted in the electrode cover.
FIG. 26 is an exploded perspective view of a needle electrode part incorporated in the negative ion electrode and a high-voltage power supply unit.
FIG. 27A is a partial front view of the needle electrode part.
FIG. 27B is a partial rear view of the needle electrode part.
FIG. 28 is an enlarged longitudinal cross-sectional view of the needle electrode part in a state of being mounted in the indoor unit body.
FIG. 29 is a block diagram showing an electric circuit of the indoor unit.

### Best Mode for Carrying Out the Invention

Hereinafter, embodiments of the present invention will be described with reference to the drawings.

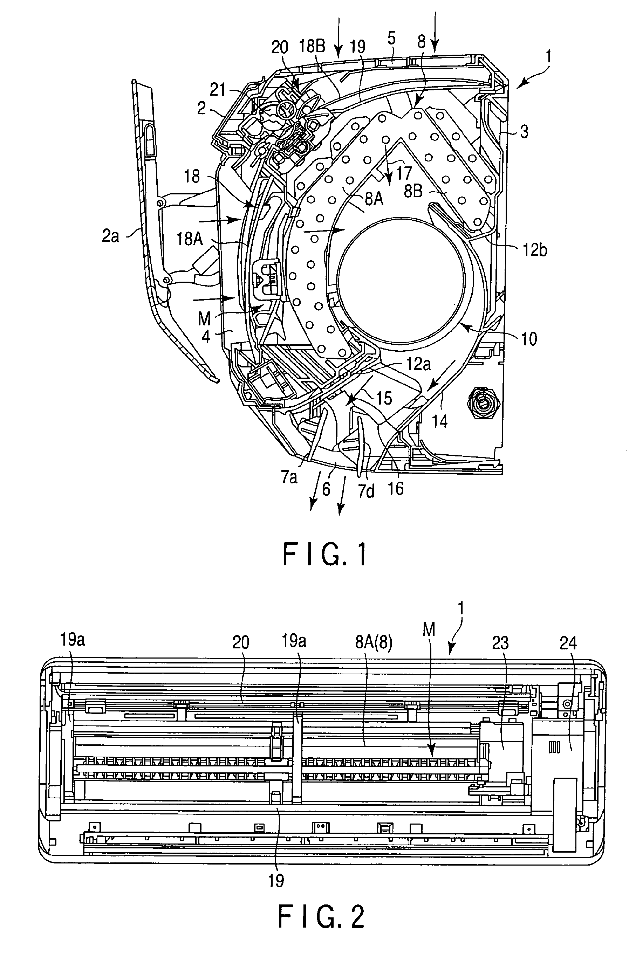

FIG. 1 is a schematic longitudinal cross-sectional view of an indoor unit constituting an air conditioner.

An indoor unit body 1 has a front panel 2, constituting a front case, and a back plate case 3 and has a horizontally long shape in the width direction relative to the up and down direction. The indoor unit body 1 has on a portion of the front surface side a front suction port 4 in which an opening/closing panel 2a is fitted in an openable and closable manner. The indoor unit body 1 has on its upper portion an upper suction port 5 fitted with a frame-like crosspiece.

The indoor unit body 1 further has a blowing port 6 opened in the lower front surface and two blowing louvers 7a and 7b provided in parallel with each other. The blowing louvers 7a and 7b change the rotation angle, whereby the blowing port 6 can be opened and closed, or a blowing direction of heat exchange air can be determined in response to operational conditions.

The indoor unit body 1 includes a heat exchanger 8 formed into a substantially inverted V-shape by a front heat exchange part 8A and a rear heat exchange part 8B. The front heat exchange part 8A is formed in a curve and provided to face a portion of the front suction port 4 and the upper suction port 5. The rear heat exchange part 8B is obliquely inclined and provided to face the upper suction port 5.

An indoor air blower 10 is disposed between the front and rear heat exchange parts 8A and 8B of the heat exchanger 8. The indoor air blower 10 is constituted of a fan motor disposed at one side end and a cross-flow fan (transverse fan) in which one spindle is mechanically coupled to a rotation shaft of the fan motor and the other spindle is supported by a bearing.

The lower end portion of the front heat exchange part 8A is on a front drain pan 12a, and the lower end portion of the rear heat exchange part 8B is on a rear drain pan 12b. The front and rear drain pans 12a and 12b receive condensation water, which is generated in and dropped from the front and rear heat exchange parts 8A and 8B accompanying the heat exchanging operation. The condensation water can be discharged outside through a discharge hose (not shown).

A portion of the front and rear drain pans 12a and 12b constitutes a nose for the indoor air blower 10. The side wall portions of the front and rear drain pans 12a and 12b which constitute the nose and the blowing port 6 are coupled by a casing 14. A blowing ventilation path 15, shown by an arrow, for communicating the nose and the blowing port 6 is provided in a space surrounded by the casing 14.

The casing 14 supports left and right louvers 16 interposed in the blowing ventilation path 15. While the two blowing louvers 7a and 7b provided in the blowing port 6 set the up and down wind directions of heat exchange air blown out from the blowing port 6, the left and right louvers 16 set the left and right wind directions.

Although there is no particular casing on the upstream side from the nose of the blowing ventilation path 15, the front suction port 4 and the upper suction port 5 are communicated with each other through the indoor air blower 10 and the heat exchanger 8. Namely, a suction ventilation path 17 shown by an arrow is formed between the front and upper suction ports 4 and 5, the heat exchanger 8, and the indoor air blower 10.

An air filter 18 is disposed between the front and upper suction ports 4 and 5 in the suction ventilation path 17 and the heat exchanger 8. The air filter 18 is supported by a front frame member 19. The end of the front frame body 19 is coupled to the front panel 2 and the back plate case 3, and the front frame body 19 is interposed between the heat exchanger 8 and the front panel 2.

The air filter 18 is constituted of a front air filter 18A and an upper air filter 18B. The front air filter 18A is provided between the vicinity of the front lower end and the front upper end of the front frame body 19 so as to be spaced substantially parallel to the front heat exchange part 8A. The upper air filter 18B is provided between the upper front end and the upper rear end of the front frame body 19 so as to be spaced from the upper end of the front heat exchange part 8A and the rear heat exchange part 8B.

The front and upper air filters 18A and 18B are respectively movably fitted in a guide rail provided in the front frame body 19. The upper end of the front air filter 18A and the front end of the upper air filter 18B are inserted in an automatic air filter cleaner 20 attached to the corner portion defined by the front surface and the upper portion of the front frame body 19.

When the automatic air filter cleaner 20 is operated, the front air filter 18A is driven to move up, and the roll brush 21 provided in the automatic air filter cleaner 20 rotates to remove dust adhered to the front air filter 18A. While the operation is continued, the front air filter 18A is moved to the upper surface side so as to face the upper air filter 18B. The movement of the front air filter 18A is stopped when the end thereof abuts against the rear end of the front panel 2.

Next, the front air filter 18A is moved in the opposite direction, and, at the same time, the roll brush 21 counterrotates to remove the remaining dust. When the front air filter 18A is returned to the original position, the movement is stopped. The upper air filter 18B is then moved forward and downward to remove the adhered dust. After the upper air filter 18B is moved to the front surface side, it is again returned to the original position. Also at this time, the remaining dust is removed.

The automatic air filter cleaner 20 alternately reciprocally moves the front and upper air filters 18A and 18B. When the filters 18A and 18B pass through the cleaner 20, the dust adhered to the filters 18A and 18B is removed to be cleaned. The dust removed by the cleaner 20 is automatically discharged outdoors through a discharge duct (not shown).

Meanwhile, a negative ion generator M is provided between the front air filter 18A constituting the air filter 18 and the front heat exchange part 8A constituting the heat exchanger 8. In other words, the air filter 18 is disposed on the upstream side of the suction ventilation path 17 of the negative ion generator M, and the heat exchanger 8 is disposed on the downstream side of the suction ventilation path 17 of the negative ion generator M.

Further, the mounting position of the negative ion generator M will be described.

FIG. 2 is a front side view of the indoor unit body 1 of the air conditioner when the front panel 2 and the air filter 18 are detached from the indoor unit body 1.

The front frame body 19 has a main frame portion 19a provided on the left side portion and the substantially central portion in the drawing and a power unit 23, for supplying a power to the negative ion generator M, attached to the right side portion in the drawing. An electric part box 24 for accommodating electric parts for controlling all the electrically driven components accommodated in the indoor unit body 1 is attached to the right side portion of the power unit 23. The automatic air filter cleaner 20 is attached between the main frame portion 19a, provided on the left side of the front upper portion of the front frame body 19, and the power unit 23.

The negative ion generator M is attached to the lower portion of the both ends of the main frame portion 19a so that the main frame portion 19a is provided at the intermediate position of the negative ion generator M. Namely, although the negative ion generator M is opposed to the air filter 18 and the heat exchanger 8 in the width direction, the dimension in the up and down direction is extremely small, thus the negative ion generator M has a substantially long box shape.

Next, the configuration of the negative ion generator M will be described in detail.

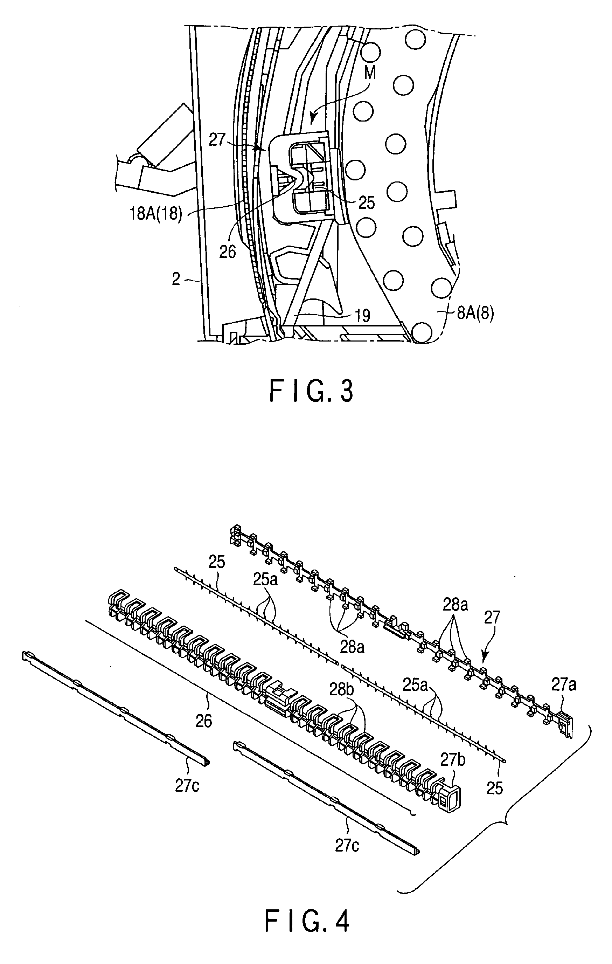

FIG. 3 is a cross-sectional view of the negative ion generator M and the periphery. FIG. 4 is an exploded perspective view of the negative ion generator M.

The negative ion generator M is constituted of a negative ion electrode 25 and an opposite electrode 26. The negative ion electrode 25 and the opposite electrode 26 are accommodated in a case body 27. The case body 27 is removably attached to the front side portion of the front heat exchange part 8A of the heat exchanger 8, or a removably attached portion of the negative ion generator M is provided in the front portion of the front frame body 19.

In any case, the negative ion generator M is reliably attached, and it can be easily detached or attached by opening the front panel 2 and the front air filter 18A of the air filter 18 when undergoing maintenance.

The negative ion electrode 25 has a plurality of needle electrodes 25a integrally and protrusively provided at a predetermined interval along the longitudinal direction. In this embodiment, two negative ion electrodes 25 are disposed in series along the axial direction, and a portion between the needle electrodes 25a is mounted in and supported by a first electrode case 27a constituting the case body 27.

The first electrode case 27a has a belt-like shape and includes projecting pieces 28a integrally provided at the upper and lower end edges at a predetermined interval. The negative ion electrode 25 is attached along the belt-like portion of the first electrode case 27a, and each end of the projecting pieces 28a is processed to be bent in a horizontal direction. The projecting pieces 28a and the belt-like portion surround the negative ion electrode 25.

In this example, a wire electrode is used as the opposite electrode 26 which is a ground electrode. The entire length of the opposite electrode 26 is the same as the length of two connected negative ion electrodes 25, and only the both ends are mounted in and supported by a second electrode case 27b constituting the case body 27. The second electrode case 27b includes latching parts 28b detachably hooking each end of the projecting pieces 28a of the first electrode case 27a, and a satisfactory space is formed over the entire length.

The opposite electrode 26 supported by the second electrode case 27b is covered on the front surface side of the second electrode case 27b by a pressing cover 27c. The pressing cover 27c presses the opposite electrode 26 to regulate the deformation of the opposite electrode 26, such as slack of the opposite electrode 26. Particularly, since a high voltage is applied to the negative ion electrode 25, the first and second electrode cases 27a and 27b and the pressing cover 27c are formed of ABS resin, which is a fire-retardant resin.

Namely, in the negative ion generator M, the first electrode case 27a and the second electrode case 27b are combined with each other, whereby the negative ion electrode 25 is accommodated in between the first and second electrode cases 27a and 27b. The opposite electrode 26 is attached into the second electrode case 27b to be pressed by the pressing cover 27c, whereby the case body 27 is provided.

Thus, a user cannot touch the negative ion electrode 25 with the needle electrodes 25a, and therefore, the safety is ensured. Further, the strength of the case body 27 is retained, and, at the same time, the case body 27 is formed in a lattice form so as to allow efficient emission of negative ions.

As shown in FIG. 1, the front and upper air filters 18A and 18B constituting the air filter 18 have an electroconductivity and are subjected to the same potential as the opposite electrode 26 of the negative ion generator M. Namely, the front and upper air filters 18A and 18B are connected to the ground potential.

Specifically, PET (polyethylene terephthalate) as a filter material is selected, and stainless steel having an electroconductivity is coated onto the surface of a filter net by sputtering, or an electroconductive paint is coated onto the filter surface.

The heat exchanger 8 also has an electroconductivity, and the same potential as the opposite electrode 26 of the negative ion generator M is applied to the heat exchanger 8. Specifically, fins of the front and rear heat exchange parts 8A and 8B of the heat exchanger 8 are formed of an aluminum material having an electroconductivity and connected to the ground potential so that the same potential as the opposite electrode 26 is applied thereto.

Further, the fins of the heat exchanger 8 are subjected to stain-proof treatment, whereby when condensation water is generated on the surface of the heat exchanger 8 to be flowed down during the cooling operation, dust adhered to the fin surface is floated to be washed away with the condensation water and thus, to be prevented from remaining on the surface.

As described above, the opposite electrode 26 and the negative ion electrode 25 constituting the negative ion generator M are disposed in this order along the suction ventilation path 17. The negative ion electrode 25 with the needle electrodes 25a and the opposite electrode 26 are oriented in the direction perpendicular to the blowing direction of the indoor air and disposed substantially parallel with the air filter 18.

The opposite electrode 26 is located close to the air filter 18, and the negative ion electrode 25 is located close to the heat exchanger 8. In other words, the air filter 18 and the heat exchanger 8 are disposed in a portion of the suction ventilation path 17 on the both sides of the negative ion generator M so that the negative ion generator M is provided between the air filter 18 and the heat exchanger 8.

Thus, the air filter 18, the opposite electrode 26, the negative ion electrode 25, and the heat exchanger 8 are disposed in this order from the upstream side to the downstream side of the suction ventilation path 17 for suctioning the indoor air. The interval between the components is set to 6 to 15 mm.

The negative ion generator M is constituted as described above, and a refrigerating cycle operation is started, and, at the same time, the indoor air blower 10 is driven, whereby the indoor air is sucked into the indoor unit body 1, and the above heat exchanging operation is performed. At the same time, the negative ion generator M is energized.

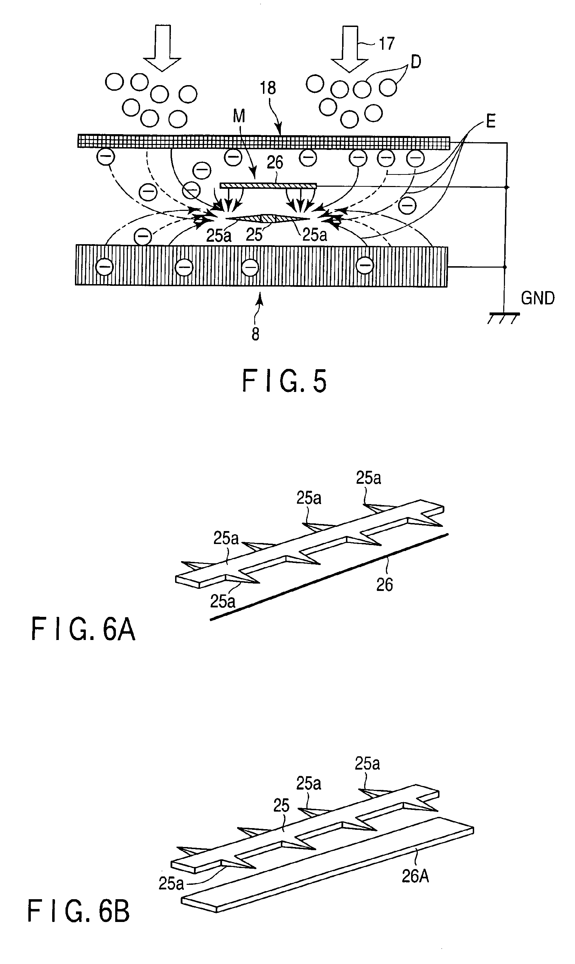

FIG. 5 is a view schematically showing the dust collecting operation. The large arrow Q of FIG. 5 shows a flow of the indoor air introduced into the suction ventilation path 17. The small arrows E show the direction of the electric field from the opposite electrode (ground electrode) 26 to the negative ion electrode 25 and the heat exchanger 8 and the air filter 18 as the opposite electrodes. D means dust. Although the opposite electrode 26 is in a plate form, it provides the same action as the above-described wire electrode.

A negative high potential is applied to the negative ion electrode 25 with the needle electrodes 25a, whereby negative ions are generated. In fact, it is found that when a potential of about -4 to -8 KV is applied to the negative ion electrode 25, the negative ions are most efficiently emitted.

The negative ions generated in the suction ventilation path 17 efficiently negatively charge all dust in the suction ventilation path 17, including dust trapped by the air filter 18, dust to be passed through the air filter 18 without being trapped, and dust arriving at the heat exchanger 8.

Meanwhile, the same ground potential as the opposite electrode 26 is applied to the air filter 18 and the heat exchanger 8, and therefore, the negatively charged dust is trapped and collected in the air filter 18 and the heat exchanger 8.

Since the dust collecting operation is performed by the air filter 18 and the heat exchanger 8, an extremely high dust collecting effect can be obtained. The negative ion generator M is provided between the air filter 18 and the heat exchanger 8, and therefore, the negative ion electrode 25 and the opposite electrode 26 can be protected from adhesion of large dust such as cotton dust.

Charged particles which are not trapped by the heat exchanger 8 collide with the cross-flow fan of the indoor air blower 10 immediately after passing through the heat exchanger 8, and thus the charged particles disappear. Therefore, particles charged with negative ions are not emitted from the blowing port 6 through the blowing ventilation path 15, and thus, contamination of a wall, for example, can be prevented.

As described above, the automatic air filter cleaner 20 is periodically driven to thereby remove the dust adhered to the front and upper air filters 18A and 18B, and the removed dust can be automatically discharged outside.

The dust adhered to the heat exchanger 8 is naturally removed by the stain-proof treatment applied to the heat exchanger 8. The dust and the condensation water are flown down in the front drain pan 12a or the rear drain pan 12b to be discharged outside trough the drain hose. Thus, the dust adhered to the heat exchanger 8 can be removed without any trouble.

While dust in the indoor air introduced in the suction ventilation path 17 is efficiently trapped and collected, the collected dust is automatically treated without the user performing any treatment, resulting in a so-called maintenance-free operation, whereby the user inconvenience can be reduced.

As described above, the indoor unit of an air conditioner includes an electric dust collecting function of positively trapping dust in indoor air. The negative ion generator M including the negative ion electrode 25 to which a negative high potential is applied constitutes the charge part, and the air filter 18 with an electroconductivity connected to ground potential and the heat exchanger 8 constitute a dust collecting part.

The negative ions generated in the negative ion electrode 25 are emitted into the entire space of the air filter 18 and the heat exchanger 8, and the number of dust particles to be negatively charged is increased, whereby a high dust collecting performance can be obtained. Particularly, since the negative ion electrode 25 with the needle electrodes 25a is disposed close to the heat exchanger 8, a discharge current is increased to further enhance the dust collecting performance.

The air filter 18, the opposite electrode 26, the negative ion electrode 25, and the heat exchanger 8 are provided at an interval of 6 to 15 mm. Thus, abnormal discharge is prevented, and a high dust collecting performance can be retained. If the distance therebetween is too small, abnormal discharge easily occurs. Meanwhile, if the distance is too large, the discharge hardly occurs, resulting in a reduction of the dust collecting performance. Namely, the above value is optimum.

In the negative ion generator M, the negative ion electrode 25 and the opposite electrode 26 are accommodated in the case body 27 with the combination of the first electrode case 27a and the second electrode case 27b and the pressing cover 27c, and therefore, a user cannot directly touch the electrodes 25 and 26. Thus, it is possible to prevent the user from being cut or receiving an electric shock.

Since a high voltage is applied to the case body 27, the case body 27 is formed of fire-retardant ABS resin and formed into a lattice. Accordingly, security can be ensured without interfering with the discharge of negative ions. The negative ion generator M is unitized to be freely attached and detached to and from the indoor unit body 1, and therefore, the maintenance can be easily performed.

The air filter 18 is provided normally for trapping dust contained in the indoor air and has the dust collecting function. Thus, it is not necessary to perform a processing for imparting an electroconductivity to the air filter 18 so that the potential of the air filter 18 is the same as the potential of the opposite electrode 26, and thus, the processing may be applied only to the heat exchanger 8.

The basic configuration in the above case is the same as that in the previous example. The negative ion generator M constituted of the negative ion electrode 25 and the opposite electrode 26 is disposed in the suction ventilation path 17 for suctioning the indoor air, the air filter 18 is disposed on the upstream side of the suction ventilation path of the negative ion generator M, and the heat exchanger 8 is disposed on the downstream side of the suction ventilation path 17 of the negative ion generator M.

Likewise, as in the previous example, the opposite electrode 26 is disposed on the air filter 18 side, and the negative ion electrode 25 is disposed on the heat exchanger 8 side. Thus, since the negative ion electrode 25 with the needle electrodes 25a approaches the heat exchanger 8, the discharge current is increased to enhance the dust collection efficiency. The heat exchanger 8 traps and collects dust which has passed through the air filter 18 without being trapped by the air filter and is negatively charged by the negative ion generator M.

Likewise, as in the previous example, the negative ion generator M is disposed between the air filter 18 and the heat exchanger 8, and therefore, large dust such as cotton dust suctioned from the indoor air is trapped and removed by the air filter 18, whereby the adhesion of the dust to the negative ion electrode 25 and the opposite electrode 26 can be prevented.

The opposite electrode 26 constituting the negative ion generator M includes the following modes.

FIGS. 6A and 6B are perspective views of the negative ion electrodes 25 with the same mode and the opposite electrodes 26 with different modes.

As in the previous example, the negative ion electrode 25 is in a plate form and has the needle electrodes 25a integrally provided at the both side edges along the longitudinal direction at a predetermined interval. As shown in FIG. 6A, the opposite electrode 26 is a wire with a circular or rectangular cross section, as in the opposite electrode 26 shown in FIG. 4.

Meanwhile, in FIG. 6B, the plate-shaped opposite electrode 26 is used. The plate-shaped electrode has, of course, a higher rigidity than a wire electrode. If a user touches the plate-shaped electrode during assembly and maintenance, there is no possibility that the electrode is deformed.

In the above embodiment, although one negative ion generator M is disposed along the width direction of the indoor unit body 1, it is not limited thereto, and the following modes may be adopted.

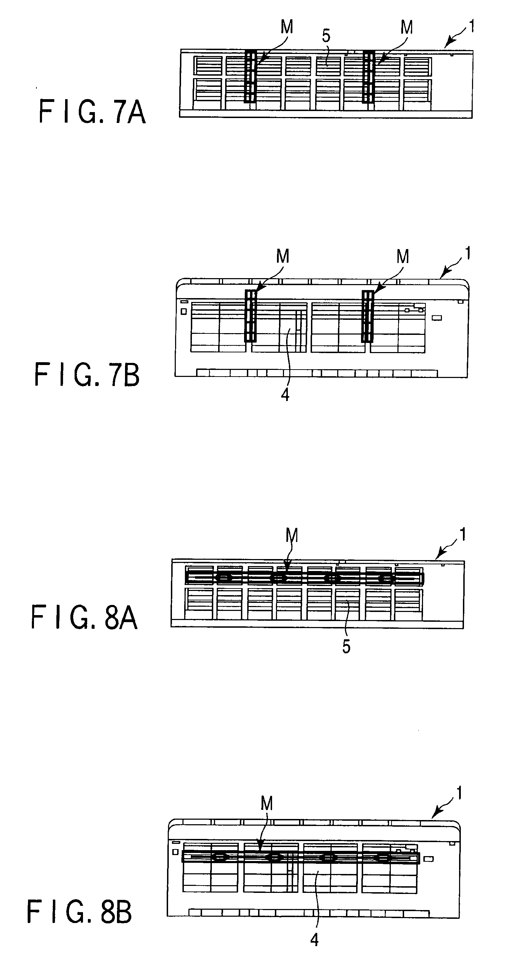

FIG. 7A is an upper view of the indoor unit body 1 for explaining the attachment state of the negative ion generators M. FIG. 7B is a front view of the indoor unit body 1 for explaining the attachment state of the negative ion generators M.

In FIGS. 7A and 7B, the two negative ion generators M are attached along the longitudinal direction (up and down direction) of the indoor unit body 1. The width in the left and right direction of the indoor unit body 1 is longer than the width in the up and down direction, whereby each width in the left and right direction of the air filter 18 and the heat exchanger 8 is also longer than the width in the up and down direction.

Meanwhile, the negative ion generators M are attached in the longitudinal direction, and therefore, in order to provide a satisfactory dust collecting function, the two negative ion generators M are preferably attached to the left and right sides of the indoor unit body 1 at a predetermined interval in the width direction. The negative ion generators M are, naturally, attached from the front surface side to the upper surface side.

FIG. 8A is an upper view of the indoor unit body 1 for explaining the attachment state of the negative ion generator M, different from that in FIG. 7. FIG. 8B is a front view of the indoor unit body 1 for explaining the attachment state of the negative ion generator M, different from that in FIG. 7.

FIG. 8A shows such a state that the negative ion generator M is attached to the front surface of the indoor unit body 1 along the width direction, and FIG. 8B shows such a state that the negative ion generator M is attached to the upper surface of the indoor unit body 1 along the width direction. The negative ion generator M attached to the front surface is positioned at the upper portion of the front surface; however, as described in FIG. 2, the negative ion generator M may be attached to the lower portion. Further, since the negative ion generator M can be attached to the top surface in addition to the front surface, a more secure, highly reliable dust collecting function can be obtained.

The following image shows emission of negative ion electrons according to the arrangement configuration of the negative ion generator M in the indoor unit body 1.

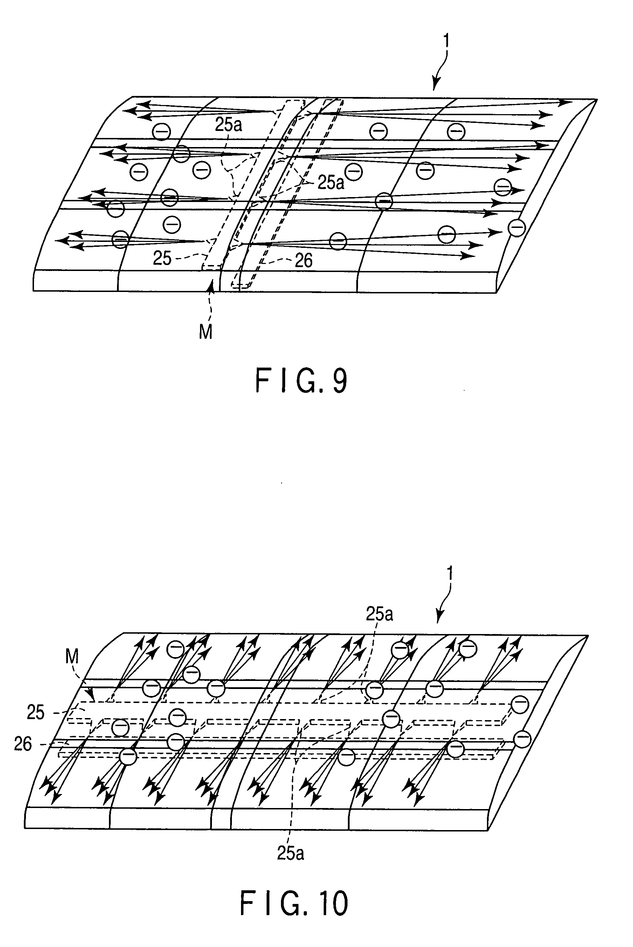

FIG. 9 is an image diagram of emission of negative ion electrons when the negative ion electrode 25 and the opposite electrode 26 constituting the negative ion generator M are attached in the longitudinal direction of the indoor unit body 1. FIG. 10 is an image diagram of emission of negative ion electrons when the negative ion electrode 25 and the opposite electrode 26 constituting the negative ion generator M are attached in the width direction of the indoor unit body 1. In FIGS. 9 and 10, the plate-shaped opposite electrode 26 is used.

As shown in FIG. 9, when the negative ion electrode 25 and the opposite electrode 26 are attached in the longitudinal direction of the indoor unit body 1, the needle electrodes 25a of the negative ion electrode 25 project in the left and right directions. Thus, the negative ions emitted from the front end of the needle electrodes 25a are emitted over the entire width direction of the suction ventilation path 17.

The negative ions are evenly showered in the indoor air guided into the suction ventilation path 17, and the dust contained in the indoor air is negatively charged. Further, the negative ions can be distributed throughout the whole of the air filter 18 and the heat exchanger 8, whereby the dust collection operation efficiency can be enhanced in the air filter 18 and the heat exchanger 8.

As shown in FIG. 10, when the negative ion electrode 25 and the opposite electrode 26 are attached to the front surface of the front heat exchange part 8A along the width direction of the indoor unit body 1, the needle electrodes 25a of the negative ion electrode 25 project in the up and down directions. When the negative ion generator M is attached to the upper portions of the front and rear heat exchange parts 8A and 8B, the needle electrodes 25a of the negative ion electrode 25 project in the front and rear direction.

Thus, the negative ion electrons emitted from the front end of the needle electrodes 25a are emitted over the entire width direction of the suction ventilation path 17. The negative ions are evenly showered in the indoor air guided into the suction ventilation path 17, and the dust contained in the indoor air is negatively charged. Further, the negative ions can be distributed throughout the whole of the air filter 18 and the heat exchanger 8, whereby the dust collection operation efficiency can be enhanced in the air filter 18 and the heat exchanger 8.

When the wire opposite electrode 26 and the plate-shaped opposite electrode 26 are compared with each other, the wire opposite electrode 26 has the advantage in cost and the mounting work, but since the strength is low, the wire opposite electrode 26 may be easily deformed. Meanwhile, the plate-shaped opposite electrode 26 is disadvantageous in cost, but it has the advantage in high rigidity and durability.

However, when the plate-shaped opposite electrode 26 is used, the configuration of the negative ion electrode 25 itself, combined with the opposite electrode 26, and the mutual dimension setting of the negative ion electrode 25 and the plate-shaped opposite electrode 26 are important.

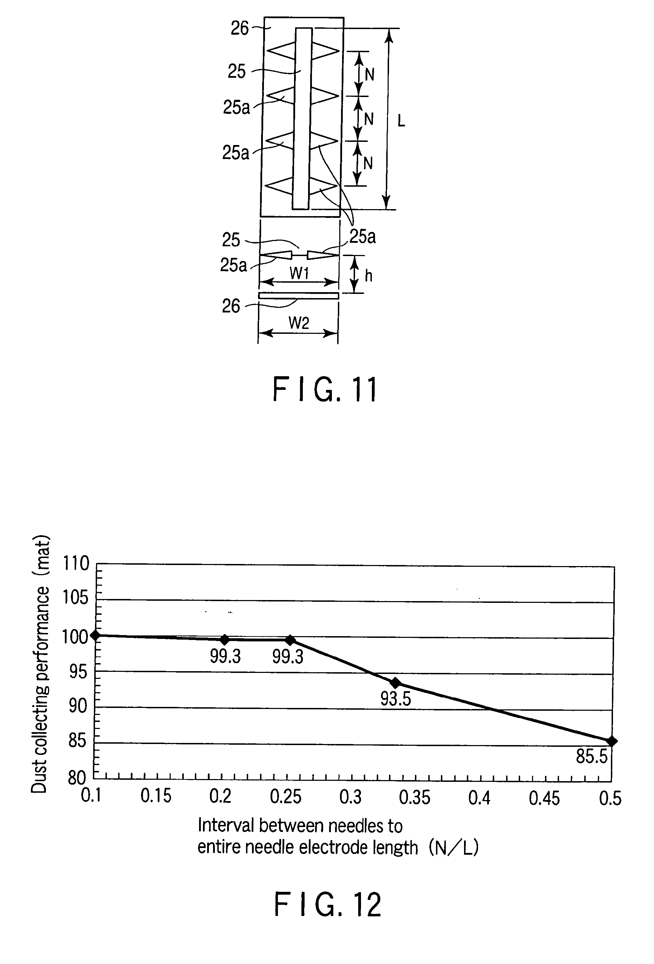

FIG. 11 is a view for explaining the dimensional configuration of the plate-shaped opposite electrode 26 and the negative ion electrode 25 with the needle electrodes 25a.

As the necessary condition, the negative ion electrode 25 and the opposite electrode 26 are disposed in parallel with each other. Taking the width dimension of the negative ion electrode 25 as W1, and the width dimension of the opposite electrode 26 as W2, the width dimension W2 is set so as to be equal to or smaller than the width dimension W1 (W1 ≥ W2). According to this constitution, negative ions can be emitted in multiple directions without losing the discharge effect of the negative ion electrode 25 and the opposite electrode 26.

Taking the entire length L of the negative ion electrode 25 as L, and the interval between the needle tips of the needle electrodes 25a of the negative ion electrode 25 as N, the interval N between the needle tips of the needle electrodes 25a is preferably set to not more than 1/4L (N ≤ 1/4L; however, N ≥ h) with respect to the entire length L of the negative ion electrode 25. FIG. 12 explains the result.

FIG. 12 is a characteristic view showing a relationship between the ratio of the interval N between the needle tips of the needle electrodes 25a to the entire length L of the negative ion electrode 25 with the needle electrodes 25a (hereinafter referred to as "entire needle electrode length" as described in FIG. 12) and the dust collecting performance. The horizontal axis represents the ratio of the interval N between the needle tips of the needle electrode to the entire needle electrode length L, and the vertical axis represents the dust collecting performance, and the measured data is obtained.

As shown in FIG. 12, it is found that the smaller the ratio of the interval N between the needle tips of the needle electrode to the entire needle electrode length L (N/L), the higher the dust collecting performance. Particularly, when the ratio of the interval N between the needle tips of the needle electrode to entire needle electrode length L is 0.1, the dust collecting performance is almost 100, and even if the ratio is not less than 0.1, the dust collecting performance is not reduced so much.

However, when the ratio of the interval N between the needle tips to the entire needle electrode length L (N/L) is more than 0.25, the dust collecting performance is steeply reduced. The downward slope of the dust collecting performance is gentle when the ratio (N/L) is about 0.33; however, the downward trend continues. Namely, as the ratio of the interval N between the needle tips to the entire needle electrode length L (N/L) increases, the discharge area is reduced, and the dust collecting performance is reduced.

As a result, when the value of the ratio of the interval N between the needle tips to the entire needle electrode length L (N/L) is 0.25, the dust collecting performance peaks and thereafter is rapidly reduced. In other words, the ratio of the interval N between the needle tips to the entire needle electrode length L (N/L) is designed to be not more than 0.25 (= 1/4), whereby a high dust collecting performance can be obtained with a satisfactorily large interval N and a high productivity. As described above, the interval N is practically set to not more than 1/4L (N ≤ 1/4L; however, N ≥ h).

Although particularly not illustrated, the angle of the needle tips of the needle electrodes 25a of the negative ion electrode 25 is set to 10° to 30°. According to this angle setting, it can be confirmed that the generation efficiency of negative ions is high. Namely, the angle of the needle tips of the needle electrodes 25a is preferably acute, and when the angle is not acute but larger, a concentrated discharge at the needle tip becomes difficult, resulting in reduction of the dust collecting performance.

The processing for imparting an electroconductivity of the same potential as the opposite electrode 26 to the air filter 18 may be performed as follows.

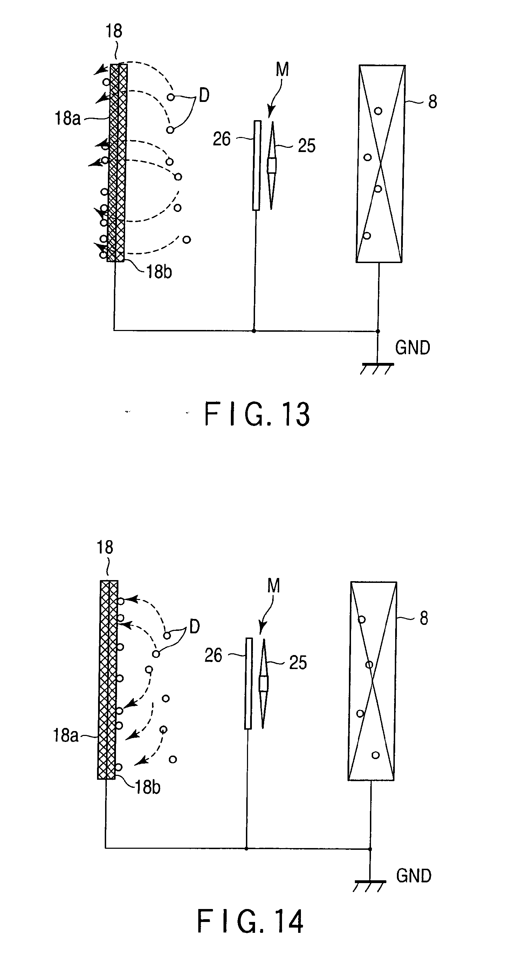

FIG. 13 is an operational explanatory view when the electroconductivity processing is applied only to the front surface (the front side of the indoor unit body 1) of the air filter 18. FIG. 14 is an operational explanatory view when the electroconductivity processing is applied only to the rear surface (a surface opposed to the front surface) of the air filter 18.

As shown in FIG. 13, when the electroconductivity processing is applied only to the front surface of the air filter 18, the negatively charged dust is trapped and collected on the front surface of the air filter 18. At the same time, needless to say, dust is also trapped and collected by the heat exchanger 8 (not shown).

The automatic air filter cleaner 20 removes the dust trapped in and adhered to the air filter 18; however, in fact, the roll brush 21 of the automatic air filter cleaner 20 is in contact with the front surface of the air filter 18. Therefore, the automatic air filter cleaner 20 can efficiently remove the dust adhered to the front surface of the air filter 18. Further, since the electroconductivity processing may be applied only to one side of the air filter 18, it is advantageous in cost.

As shown in FIG. 14, when the electroconductivity processing is applied only to the rear surface of the air filter 18, the negatively charged dust is trapped and collected on the rear surface of the air filter 18. At the same time, needless to say, the dust is also trapped and collected in the heat exchanger 8.

In that case, since the distance between the surface of the air filter 18 subjected to the electroconductivity processing and the negative ion electrode 25 is small, the dust collecting effect is enhanced. Further, since the electroconductivity processing may be applied only to one side of the air filter 18, it is advantageous in cost as in the above case.

Although particularly not illustrated, when the electroconductivity processing is applied to the front and rear surfaces of the air filter 18, dust is easily adhered to the entire air filter 18, and the adhered dust is easily removed.

In the indoor unit of an air conditioner, while moisture is removed from the indoor air to be dried and sent accompanying an air conditioning (cooling) operation, the inside of the indoor unit body 1 is highly humidified. Mold may grow in each component of the indoor unit body 1 with long-term use, leading to unsanitary conditions, whereby a foul smell sometimes may occur.

Thus, a DC discharge current value is switched to large in the negative ion generator M, and corona discharge is generated between the negative ion electrode 25 and the opposite electrode 26 to increase the amount of generated ozone. The inside of the indoor unit body 1 can therefore be cleaned by ozone-sterilization.

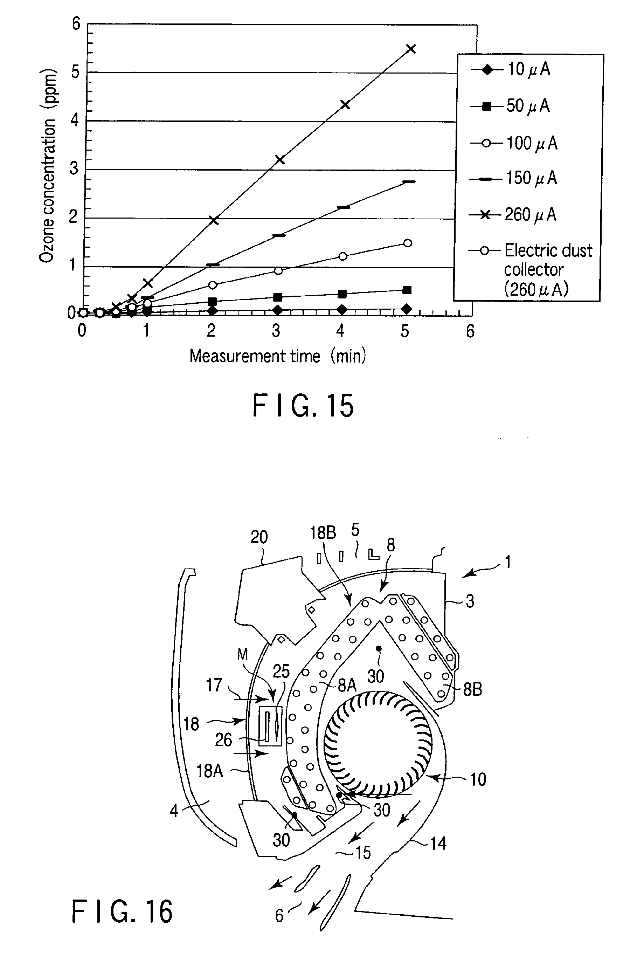

FIG. 15 is a characteristic view of a DC discharge current amount versus ozone concentration.

Namely, the horizontal axis represents the measurement time (min), and the vertical axis represents the ozone concentration. Various DC discharge current values are selected to be supplied to the negative ion generator M. The specific values of the DC discharge current values are 10 µA, 50 µA, 100 µA, 150 µA, and 260 µA.

As a result, when a DC discharge current amount of 10 µA is supplied to the negative ion generator M, even if the measurement time is increased, ozone is hardly generated. Thus, this DC discharge current amount is optimum for realizing the electric dust collecting function. If a DC discharge current amount of more than 10 µA is supplied to the negative ion generator M, the amount of ozone is increased, which affects the dust collecting function.

In a conventional electric dust collector constituted of a charging electrode and a dust collecting electrode, the DC discharge current amount is set to 260 µA. It is found that the amount of generated ozone at this time is substantially the same as in the case where the DC discharge current amount of 100 µA is supplied to the negative ion generator M.

Namely, when the inside of the indoor unit body 1 is ozone-sterilized, a DC discharge current amount of 100 µA is supplied to the negative ion generator M, whereby corona discharge can be generated between the negative ion electrode 25 and the opposite electrode 26 under optimum conditions. Even if a DC discharge current amount of more than 100 µA is supplied to the negative ion generator M, the ozone amount is too large, resulting in an adverse effect. Meanwhile, when the supplied DC discharge current amount of less than 100 µA is supplied, the inside of the indoor unit body 1 cannot be satisfactorily ozone-sterilized.

As described above, a DC discharge current amount of 10 µA is required to be supplied to obtain a satisfactory dust collecting function in the negative ion generator M, and, when the inside of the indoor unit body 1 is satisfactorily ozone-sterilized, a current control circuit for switching the DC discharge current value to 100 µA is provided. According to this constitution, it is possible to reliably cope with any processing.

In the above embodiment, at least one of the air filter 18 and the heat exchanger 8 has an electroconductivity of the same potential as the opposite electrode 26 of the negative ion generator M and traps and collects the negatively charged dust; however, it is not limited thereto.

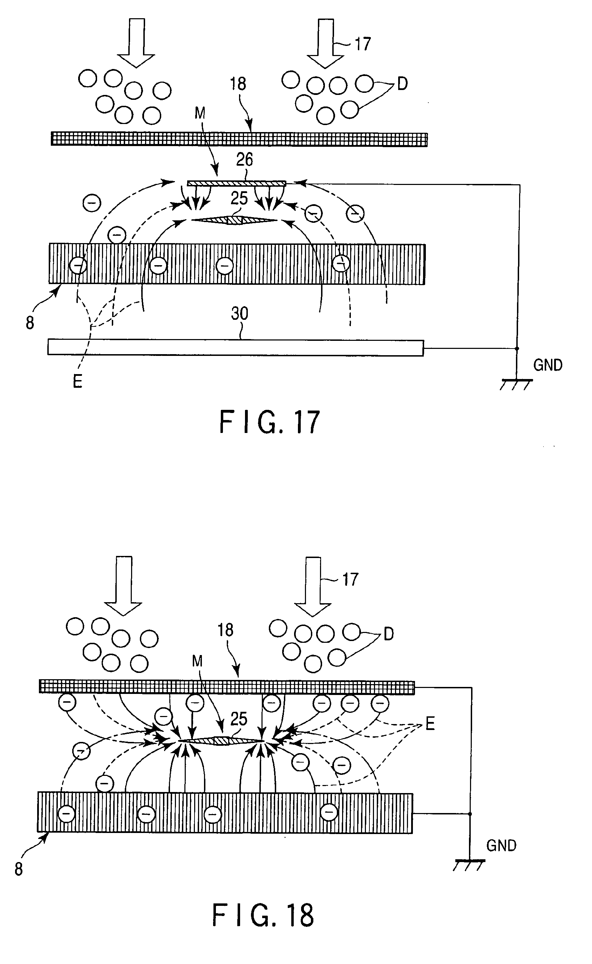

FIG. 16 is a view schematically showing an indoor unit of an air conditioner in an embodiment different from the above embodiment of the invention. FIG. 17 is a view explaining the dust collecting operation in the indoor unit of an air conditioner. In FIG. 16, the same components as those in FIG. 1 are assigned the same reference numerals, and the description thereof is omitted.

As in the previous embodiment, the negative ion generator M is disposed in the suction ventilation path 17 for suctioning indoor air and constituted of the negative ion electrode 25 subjected to application of a high voltage, and the opposite electrode 26, which is a ground electrode, provided to face the negative ion electrode 25.

Also in this embodiment, the air filter 18 is disposed on the upstream side of the suction ventilation path 17 of the negative ion generator M, and the heat exchanger 8 is disposed on the downstream side of the suction ventilation path 17 of the negative ion generator M. Thus, the opposite electrode 26 is located close to the air filter 18, and the negative ion electrode 25 is located close to the heat exchanger 8. These components are disposed at an interval of 6 to 15 mm.

In this embodiment, an auxiliary electrode 30 is provided near the heat exchanger 8. The auxiliary electrode 30 has a round bar shape (φ4 mm) or a plate shape (with a plate thickness of 4 mm) and is electroconductivity connected to the ground potential, which is the same as the potential of the opposite electrode 26 of the negative ion generator M.

As shown in FIG. 16, the three auxiliary electrodes 30 are respectively mounted in a position facing the lower portions of the front and rear surfaces of the front heat exchange part 8A constituting the heat exchanger 8 and a position facing a bending portion formed between the front heat exchange part 8A and the rear heat exchange part 8B. However, in FIG. 17, the auxiliary electrode 30 is illustrated as one electrode.

In the above constitution, when an electrode is directly applied to the heat exchanger 8 itself, noise may occur in the neighboring electric components. Therefore, a countermeasure against noise is required to be provided in the electric part box 24 or a circuit. Thus, the auxiliary electrode 30 of the same potential as the opposite electrode 26 is disposed near the heat exchanger 8, whereby a similar action can be obtained.

Namely, a negative high potential is applied to the negative ion electrode 25 with the needle electrodes 25a, and the ground potential is applied to the opposite electrode 26 and the auxiliary electrode 30, whereby an electric field is generated in the direction shown by various small arrows, and negative ions are generated from the negative ion electrode 25. As in the previous embodiment, a potential of about -4 to -8 KV is applied to the negative ion electrode 25, whereby the negative ion electrode 25 can most efficiently emit negative ions.

The negative ions generated in the suction ventilation path 17 efficiently negatively charge fine dust which is contained in the indoor air and has passed through the air filter 18 without being trapped by the air filter 18. Meanwhile, the negative ions generated enter the heat exchanger 8 and the air filter 18, and the heat exchanger 8 and the air filter 18 have the same potential as the opposite electrode 26 to trap and collect the negatively charged dust.

Namely, the auxiliary electrode 30 with the same potential as the opposite electrode 26 is disposed near the heat exchanger 8 disposed more downstream of the suction ventilation path 17 than the negative ion generator M, whereby the negatively charged dust is pulled to the side of the heat exchanger 8 and then trapped on the fin surface when passing through the heat exchanger 8, and thus, a higher dust collecting effect can be obtained.

Since the negative ion generator M is disposed between the air filter 18 and the heat exchanger 8, the negative ion electrode 25 and the opposite electrode 26 can be protected from adhesion of large dust such as cotton dust. Since negative ions are not present in the blowing port 6, no negatively charged dust enters the room, which would otherwise cause, for example, contamination of a wall.

In the negative ion generator M, the DC discharge current value is rendered large, whereby corona discharge can be generated between the negative ion electrode 25 and the opposite electrode 26 to ozone-sterilize the inside of the indoor unit body 1.

FIG. 18 is a view for explaining a dust collecting operation in an indoor unit of an air conditioner including the negative ion generator M in a further different embodiment.

In this embodiment, the negative ion generator M includes only the negative ion electrode 25 having the needle electrodes 25a. As in the previous embodiment, the negative ion electrode 25 is disposed between the air filter 18 and the heat exchanger 8. The ground potential as the opposite electrode 26 is applied to the air filter 18 and the heat exchanger 8.

Namely, the negative ions are emitted from the negative ion generator M to the air filter 18 and the heat exchanger 8, and the negatively charged dust can be trapped and collected by the air filter 18 and the heat exchanger 8 having an electroconductivity.

The negative ion electrode 25 is disposed between the air filter 18 and the heat exchanger 8, whereby the needle electrodes 25a of the negative ion electrode 25 can be protected from adhesion of large dust such as cotton dust. Since the negative ions are generated in the suction ventilation path 17, the dust contained in the indoor air circulating in the suction ventilation path 17 is effectively negatively charged to be reliably trapped and collected by the air filter 18 and the heat exchanger 8.

As well as obtaining a high dust collecting effect, untrapped charged particles collide with the indoor air blower 10 and disappear, and therefore, the charged particles are not emitted into a room, whereby contamination of a wall can be prevented. The air filter 18 and the heat exchanger 8 do not necessarily have an electroconductivity which is the same potential as the opposite electrode 26, and the ground potential may only be applied to the heat exchanger 8 as an opposite electrode.

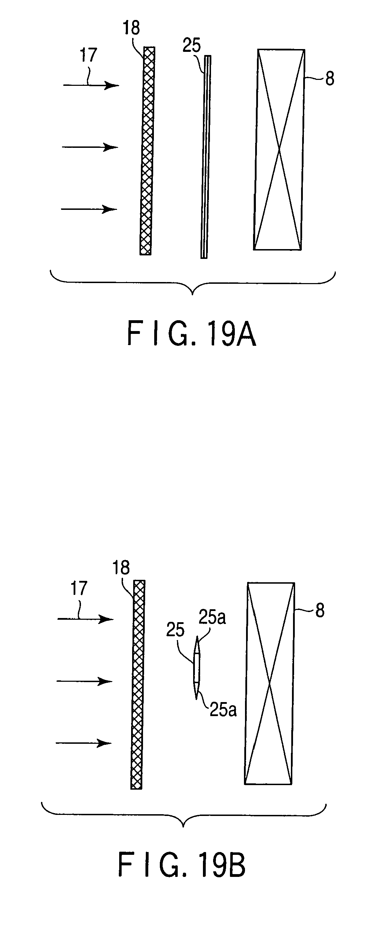

In an embodiment shown in FIG. 19A and subsequent drawings, only the heat exchanger 8 is used as the opposite electrode to the negative ion electrode 25, and the ground potential is applied to the heat exchanger 8.

FIG. 19A is a schematic plan view showing a constitution of the air filter 18, the negative ion electrode 25, and the heat exchanger 8. FIG. 19B is a schematic side elevation view of their arrangement.

In the indoor unit of an air conditioner, the air filter 18, the negative ion electrode 25, and the heat exchanger 8 are disposed in this order along the suction ventilation path 17 for suctioning indoor air. A high voltage of negative potential is applied to the negative ion electrode 25, whereby dust circulating in the suction ventilation path 17 and contained in the indoor air derived from the air filter 18 is negatively charged.

The heat exchanger 8 disposed to face the negative ion electrode 25 is subjected to application of a ground potential and constitutes the opposite electrode to the negative ion electrode 25. Namely, the negative ions are emitted from the negative ion electrode 25 to the air filter 18 and the heat exchanger 8, and the heat exchanger 8 subjected to application of the ground potential traps and collects the negatively charged dust.

Further, the heat exchanger 8 exchanges heat with the indoor air introduced into the suction ventilation path 17, and the cleaned heat-exchanged air is guided from the heat exchanger 8 to the indoor air blower 10. The charged particles which are not trapped by the heat exchanger 8 collide with the indoor air blower 10 and disappear, and therefore, the charged particles are not emitted into a room, whereby contamination of a wall can be prevented.

The air heat-exchanged and cleaned by the heat exchanger 8 is finally introduced into the blowing ventilation path 15 to be blown out from the blowing port 6. The heat-exchanged air is filled in a room to provide air conditioning, and, at the same time, air cleaning is realized. Incidentally, large dust such as cotton dust is not adhered to the needle electrodes 25a of the negative ion electrode 25.

Particularly, as shown in the planar view of FIG. 19A, the air filter 18, the negative ion electrode 25, and the heat exchanger 8 are formed to have substantially the same dimension as each other in the width direction, that is, the left and right direction as viewed from the front side of the indoor unit body 1.

Further, as shown in the lateral view of FIG. 19B, the air filter 18 and the heat exchanger 8 are formed to have substantially the same dimension as each other in the up and down direction, which is perpendicular to the width direction. However, the negative ion electrode 25 is disposed at a substantially central portion in the up and down direction of the air filter 18 and the heat exchanger 8. The needle electrodes 25a of the negative ion electrode 25 project in the up and down directions.

A negative high potential is applied to the needle electrodes 25a of the negative ion electrode 25, and the ground potential is applied to the opposite electrode which is the heat exchanger 8, whereby, based on the position of the negative ion electrode 25 and setting of the projecting direction of the needle electrodes 25a, an electric field is uniformly distributed between the heat exchanger 8 and the air filter 18, and the negative ions are evenly filled.

Even when the dust contained in the indoor air passes through the air filter 18 without being trapped by the air filter 18, the dust is reliably negatively charged immediately after passing through the air filter 18 or before arriving at the heat exchanger 8. Thus, even when the negatively charged dust arrives at the heat exchanger 8, the dust is reliably trapped and collected by the heat exchanger 8.

The heat exchanger 8 is subjected to application of the ground potential to be used as the opposite electrode; however, the electroconductivity processing is applied to the air filter 18 in a similar manner, and the ground potential is applied to the air filter 18, whereby the air filter 18 may be used as the opposite electrode. Although it is preferable that both sides of the air filter 18 are subjected to the electroconductivity processing, only one side may be subjected to the electroconductivity processing.

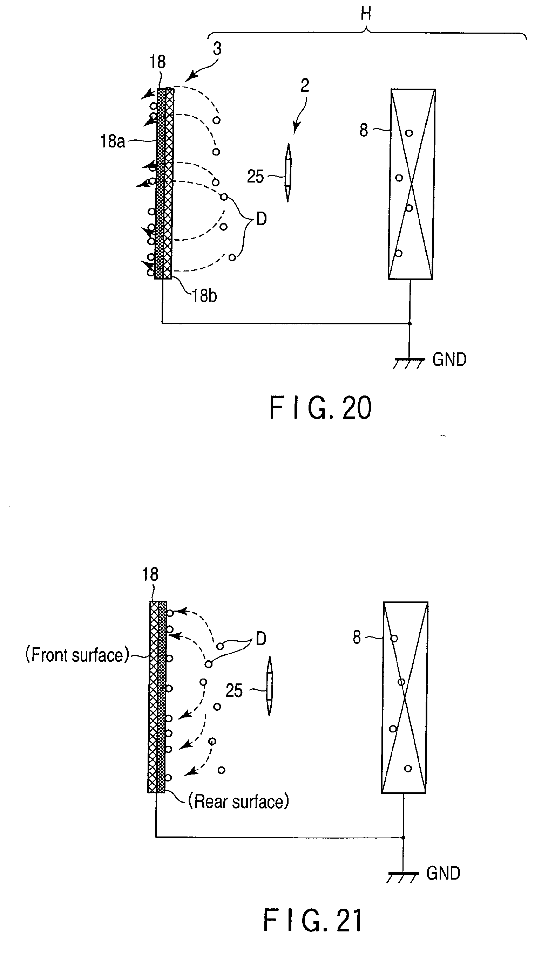

FIG. 20 is an operation explanatory view when the electroconductivity processing is applied only to a front surface 18a (front side of the indoor unit body 1) of the air filter 18, and the air filter 18 is used as the opposite electrode. FIG. 21 is an operation explanatory view when the electroconductivity processing is applied only to a rear surface 18b (the opposite side of the front surface 18a) of the air filter 18, and the air filter 18 is used as the opposite electrode.

As shown in FIG. 20, when the electroconductivity processing is applied only to the front surface 18a of the air filter 18, and the air filter 18 is used as the opposite electrode, the negatively charged dust is trapped and collected on the front surface 18a of the air filter 18. The automatic air filter cleaner 20 can efficiently remove the dust adhered to the front surface 18a of the air filter 18.

As shown in FIG. 21, when the electroconductivity processing is applied only to the rear surface 18b of the air filter 18, and the air filter 18 is used as the opposite electrode, the negatively charged dust is trapped and collected on the rear surface 18b of the air filter 18. In this case, since the distance between the surface of the air filter 18 subjected to the electroconductivity processing and the negative ion electrode 25 is small, the dust collecting effect is enhanced.

In any constitution, since the electroconductivity processing may be applied only to one side of the air filter 18, it is advantageous in cost. Of course, when the electroconductivity processing is applied to the front and rear surfaces 18a and 18b of the air filter 18, dust is easily adhered to the entire air filter 18, and the adhered dust is easily removed.

A dimensional configuration in the case where the negative ion electrode 25 is provided as a negative ion generator and the opposite electrode is only the heat exchanger 8 will be described below.

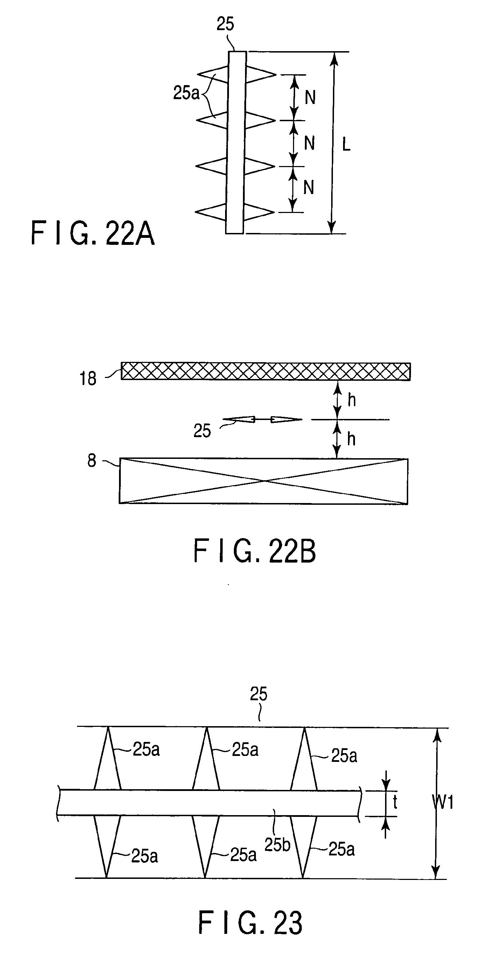

FIG. 22A is a dimensional configuration diagram of the negative ion electrode 25. FIG. 22B is a view for explaining the interval dimension of the air filter 18 and the heat exchanger 8 to the negative ion electrode 25.

When the entire length of the negative ion electrode 25 is L, and the interval between the needle tips of the needle electrodes 25a of the negative ion electrode 25 is N, the interval N between the needle tips of the needle electrodes 25a is preferably set to not more than 1/4L (N ≤ 1/4L; however, N ≥ h) with respect to the entire length L of the negative ion electrode 25.

As shown in FIG. 12, when the ratio of the interval N between the front ends of the needle electrodes to the entire length L of the negative ion electrode (N/L) is 0.25, the dust collecting performance peaks and thereafter is rapidly reduced. The ratio is set to not more than 0.25 (= 1/4), whereby a high dust collecting performance can be obtained with a satisfactorily large interval N, and a high productivity. The interval N is practically set to not more than 1/4L (N ≤ 1/4L; however, N ≥ h).

As shown in FIG. 22B, the negative ion electrode 25 is disposed in parallel with the surface direction of the heat exchanger 8 and the air filter 18. The interval dimension h from the negative ion electrode 25 to the air filter 18 and the interval dimension h from the negative ion electrode 25 to the heat exchanger 8 are preferably set to 6 to 15 mm (when output voltage is 4 to 8 KV).

When the dimension is set as described above, a negative high potential is applied to the needle electrodes 25a of the negative ion electrode 25, and the ground potential is applied to the opposite electrode which is at least the heat exchanger 8, whereby based on the position of the negative ion electrode 25 and the setting of the projecting direction of the needle electrodes 25a, the electric field between the heat exchanger 8 and the air filter 18 is uniformly distributed, and a high dust collecting effect can be obtained.

As described in the previous embodiment, the angle of the needle tips of the needle electrodes 25a of the negative ion electrode 25 is set to 10° to 30°. However, when the needle electrodes 25a project from the both sides of a flat plate, setting of the width between the front ends of the needle electrodes 25a and the relationship between the front end width and the thickness of the flat plate are important.

FIG. 23 is a view for explaining the width W1 between the front ends of the needle electrodes 25a of the negative ion electrode 25 and the relationship between the width W1 and the plate thickness t of a flat plate 25b.

Namely, the width W1 between the front ends of the needle electrodes 25a of the negative ion electrode 25 is set to 10 to 20 mm, whereby a concentrated discharge reliably occurs at the front ends of the needle electrodes 25a, and the generation efficiency of negative ion is high.

The relationship between the width W1 between the front ends of the needle electrodes 25a of the negative ion electrode 25 and the plate thickness t of the flat plate 25b is set to 20 < (the width W1/the thickness t of the flat plate 25b) < 100. According to this constitution, the emission amount of the negative ions for negatively charging dust can be satisfactorily ensured.

As described in the previous embodiment, while moisture is removed from the indoor air to be dried and sent accompanying an air conditioning (cooling) operation, the inside of the indoor unit body 1 is highly humidified. Mold may grow in each component of the indoor unit body 1 with long-term use, leading to unsanitary conditions, whereby a foul smell sometimes may occur.

Thus, the DC discharge current value of the negative ion electrode 25 is switched to large, and corona discharge is generated between the negative ion electrode 25 and the heat exchanger 8, which is the opposite electrode, to increase the amount of generated ozone, whereby the inside of the indoor unit body 1 can be cleaned by ozone sterilization.

FIG. 15 shows the ozone concentration characteristic corresponding to the numerical value of the DC discharge current value when the negative ion electrode 25 and the opposite electrode 26 are provided as the negative ion generator M, and the heat exchanger 8 and/or the air filter 18 is provided as the opposite electrode.

In that case, as basically shown in FIG. 20, the negative ion generator (air cleaning unit) is constituted of the negative ion electrode 25 and the heat exchanger 8, which is the opposite electrode, and exchanges heat with the indoor unit.

Since the DC discharge current value in that case is different in conditions from the case of FIG. 15, the experiment is performed again, and the DC discharge current value versus the ozone concentration is examined.

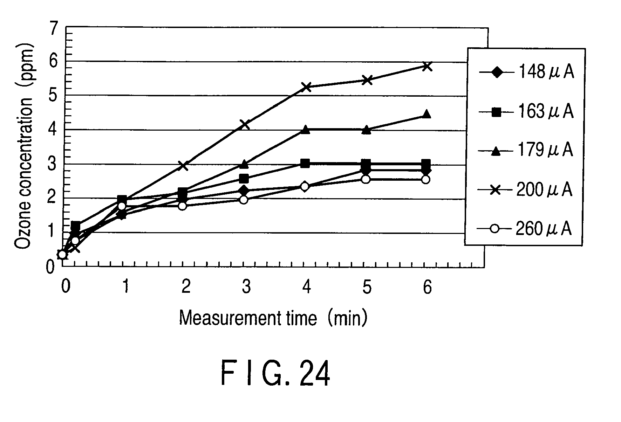

FIG. 24 is a characteristic view of the DC discharge current amount versus the ozone concentration when the negative ion generator is constituted of the negative ion electrode 25 and the heat exchanger 8, which is the opposite electrode.

The horizontal axis represents the measurement time (min), and the vertical axis represents the ozone concentration. Various DC discharge current values are selected to be supplied to the negative ion electrode 25. The specific values of the DC discharge current values of the negative ion electrode 25 are 148 µA, 163 µA, 179 µA, and 200 µA.

As described above, in the conventional electric dust collector constituted of a charge electrode and a dust collecting electrode, the DC discharge current amount is set to 260 µA. It is found that the amount of generated ozone when the DC discharge current amount to the electric dust collector is 260 µA and the amount of generated ozone when the DC discharge current amount to the negative ion electrode 25 is 148 µA or 163 µA indicate the approximate value.

Namely, the negative ion generator is constituted of the negative ion electrode 25 and the heat exchanger 8 which is the opposite electrode, and when the inside of the indoor unit body 1 is ozone-sterilized, the DC discharge current value is set to 150 to 165 µA, which is substantially the same as the amount of generated ozone of the conventional electric dust collector, whereby corona discharge can be generated under optimum conditions.

The supporting structure of the negative ion electrode 25 when the negative ion generator is constituted of the negative ion electrode 25 and the heat exchanger 8 which is the opposite electrode is different from the supporting structure previously described in FIG. 4.

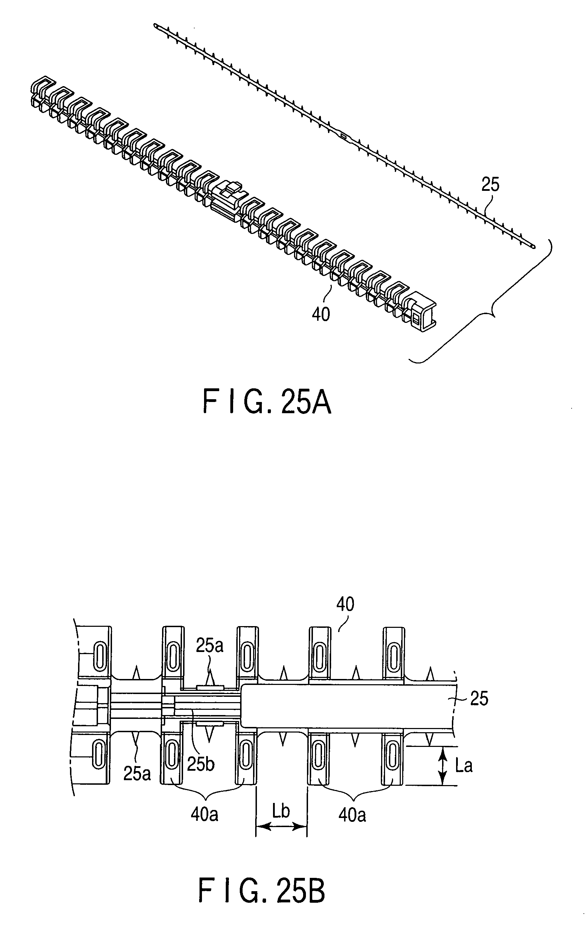

FIG. 25A is an exploded perspective view of the negative ion electrode 25 and an electrode cover 40. FIG. 25B is a partial front view of the negative ion electrode 25 supported by the electrode cover 40.

The negative ion electrode 25, as described above, has the needle electrodes 25a protrusively provided in the upper and lower end portions of the flat plate 25b at a predetermined interval along the longitudinal direction. The flat plate 25b of the negative ion electrode 25 has screw insertion holes for inserting a screw in the both end portions in the longitudinal direction and a substantially intermediate portion.

The electrode cover 40 has screw holes in the both end portions in the longitudinal direction and a substantially intermediate portion. The diameter and pitch of the screw holes correspond to the diameter and the pitch of the screw insertion holes of the negative ion electrode 25. The electrode cover 40 further includes a plurality of lattices 40a provided along the longitudinal direction at a predetermined interval, which is the same as the interval of the needle electrodes 25a, and formed to be bent so that the cross-section is in a substantially U shape.

The negative ion electrode 25 is placed into the electrode cover 40, and the screw insertion holes provided in the negative ion electrode 25 are opposed to the screw holes of the electrode cover 40. A fixing screw is threadedly inserted into the screw hole through the screw insertion hole, whereby the negative ion electrode 25 can be attached and fixed to the electrode cover 40 as shown in FIG. 25B.

In the above state, the needle electrodes 25a of the negative ion electrode 25 are opposed to a substantially central portion between the lattices 40a constituting the electrode cover 40. The negative ions emitted from the front end of the needle electrode 25a are not blocked, which enables smooth operation. Further, as shown in FIG. 25B, the projecting length from the front end of the needle electrode 25a to the front end of the electrode cover 40 is set to 7 to 15 mm, and the interval between the lattices 40a is set to 5 to 12 mm.

Thus, even if an operator holds the electrode cover 40 supporting the negative ion electrode 25 during assembling or maintenance, he does not easily directly touch the needle electrodes 25a. In other words, the electrode cover 40 covers the needle electrodes 25a so that the safety is ensured, and thus it is possible to prevent the operator from being cut or receiving an electric shock.

When the indoor unit is used for a long period of time, the adhesion of dust to the needle electrodes 25a due to the influence of static electricity cannot be prevented. If the dust remains untouched, it is accumulated, leading to a deterioration of the dust collecting efficiency. Thus, the indoor unit of the invention is designed so that it is not necessary for the maintenance operation for the negative ion electrode 25 to be performed by a professional, and a resident (user) can perform maintenance.

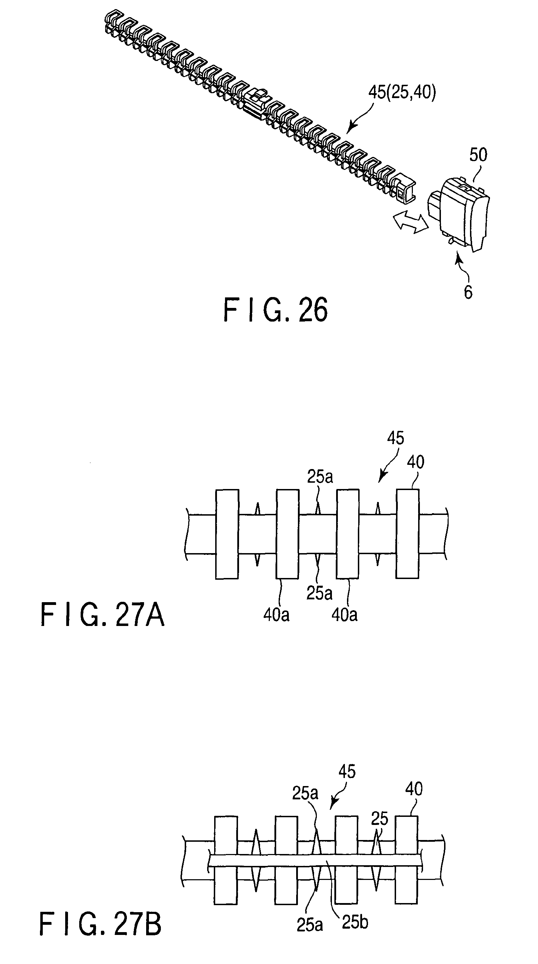

FIG. 26 is a configuration diagram of a needle electrode unit 45.

The negative ion electrode 25 with the projecting needle electrodes 25a is covered by the electrode cover 40 to be integrated with the electrode cover 40, whereby the needle electrode unit 45 is formed. One end side of the needle electrode unit 45 is detachably connected to a high-voltage power supply unit 50 for supplying a high-voltage power to the negative ion electrode 25.

Namely, the high-voltage power supply unit 50 is disposed in a predetermined portion in the indoor unit body 1, and the needle electrode unit 45 is interlocked with the portion. In such a state, the dust collecting operation is performed in the above-described manner. In the maintenance of the negative ion electrode 25, the interlocking of the high-voltage power supply unit 50 and the needle electrode unit 45 is released, and the needle electrode unit 45 is then removed from the indoor unit body 1.

As described above, since the needle electrodes 25a of the negative ion electrode 25 are covered by the electrode cover 40, there is no danger. If a brush is used, the dust adhered to the needle electrodes 25a can be removed without detaching the negative ion electrode 25 from the electrode cover 40 and disassembling the needle electrode unit 45.

After the maintenance, the needle electrode unit 45 is returned to a predetermined position in the indoor unit body 1, and one end side of the needle electrode unit 45 may be fitted into the high-voltage power supply unit 50. Accordingly, not only professionals but also a resident (user) can easily and safely perform maintenance of the negative ion electrode 25, whereby the operability can be enhanced.

In order to enhance the dust collecting efficiency, the electrode cover 40 covering the needle electrodes 25a of the negative ion electrode 25 is constituted as follows.

FIG. 27A is a schematic front view of the needle electrode unit 45 as viewed from the front side of the indoor unit body 1. FIG. 27B is a schematic rear view of the needle electrode unit 45 as viewed from the heat exchanger 8 disposed on the back side of the indoor unit body 1.

As described in FIG. 25B, the pitch of the needle electrodes 25a and the pitch of the lattices 40a of the electrode cover 40 are the same, and the needle electrodes 25a and the lattices 40a are mounted to deviate from each other. Thus, in the planar view of FIG. 27A, the entire electrode cover 40 is shown. Only the projecting front ends of the needle electrodes 25a are shown from between the lattices 40a.

In the rear view of FIG. 27B, the entire negative ion electrode 25 is shown, and the electrode cover 40 covering the negative ion electrode 25 is shown. However, the opening end side of the electrode cover 40 with a cross-section of a substantially U shape is shown, and the portion mounted with the negative ion electrode 25 is shielded by the negative ion electrode 25.

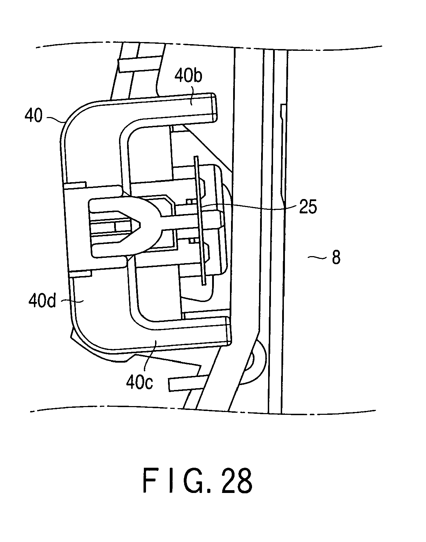

FIG. 28 is an enlarged cross-sectional view of the negative ion electrode 25 mounted in the indoor unit body 1.

Based on the above description of the configuration, the electrode cover 40 with a cross-section formed into a U shape covering the negative ion electrode 25 is mounted so that the opening end of the electrode cover 40 faces the heat exchanger 8, and a vertical piece 40d connecting upper and lower pieces 40b and 40c is mounted to face the front suction port 4 and the air filter 18.

As described above, since the portion of the electrode cover 40 facing the heat exchanger 8 is opened, there is no component blocking between the negative ion electrode 25 and the heat exchanger 8 which is the opposite electrode. Therefore, since there is no obstacle against the negative ion discharge from the negative ion electrode 25 to the heat exchanger 8, a high dust collecting performance can be obtained.

For example, the electrode cover 40 is mounted so as to reverse the front and rear sides, the opening end of the electrode cover 40 is made to face the front suction port 4 and the air filter 18, and the vertical piece 40d is mounted to face the heat exchanger 8. Namely, a portion of the electrode cover 40 is interposed between the negative ion electrode 25 and the heat exchanger 8, and the discharge from the negative ion electrode 25 is blocked by the electrode cover 40.

In the above constitution, the emission amount of negative ions would be reduced, so there would be less negative ions for the dust, thus the amount of dust trapped in the heat exchanger 8 would be reduced, leading to an adverse effect on the dust collecting efficiency. Thus, the electrode cover 40 is required to be constituted so that the portion facing the heat exchanger 8 is open.

The negative ion generator constituted of the negative ion electrode 25 and the heat exchanger 8, which is the opposite electrode, is provided, and it is necessary to prevent the generation of noise due to abnormal discharge and enhance the dust collecting performance. In the following example, the dust collecting performance is electrically enhanced.

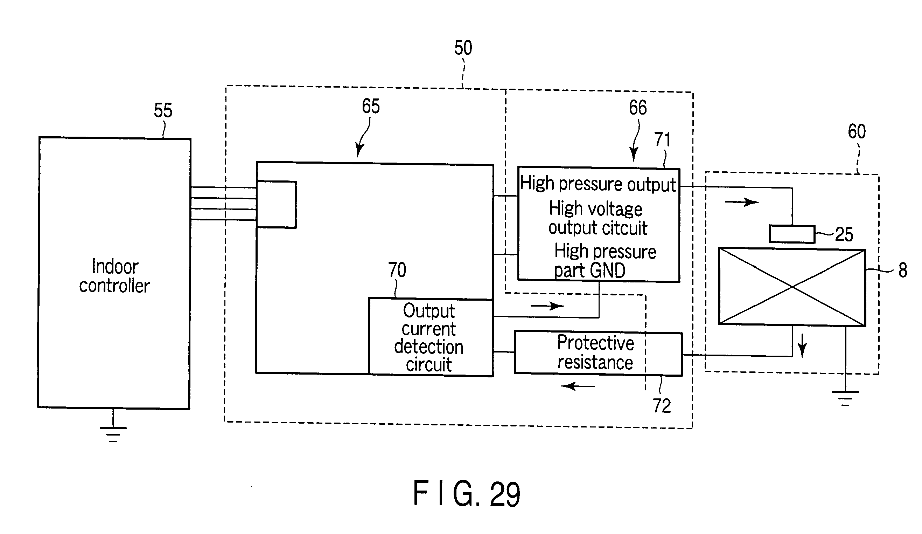

FIG. 29 is a block diagram of an electrical circuit constituting the indoor unit of an air conditioner.

An electrical circuit of the indoor unit includes an air cleaning unit (namely, the negative ion generator) 60 including an indoor controller 55, the high-voltage power supply unit 50 described in FIG. 26, the negative ion electrode 25, and the heat exchanger 8 which is the opposite electrode.

The indoor controller 55 is disposed in the indoor unit body 1, and receives a transmission signal from a remote control panel (remote controller) to control a drive source, such as the fan motor of the indoor air blower 10, the blowing louvers 7a and 7b, a drive motor of the left and right louvers 16, a drive motor of the opening/closing panel 2a, and a drive motor of the automatic air filter cleaner 20.

The indoor controller 55 transmits an operation instruction signal to a compressor accommodated in an outdoor unit constituting the air conditioner, an outdoor air blower, an outdoor unit control part which controls, for example, a four-way selector valve and an electronically controlled valve, whereby the indoor controller 55 controls the outdoor unit.

The high-voltage power supply unit 50 is a circuit for supplying a high-voltage power to the negative ion electrode 25 constituting the air cleaning unit 60 and is constituted of a control circuit part 65 and a high-voltage part 66. The control circuit part 65 receives a control signal from the indoor controller 55 to control the supply of the high-voltage power to the high-voltage part 66. The control circuit part 65 includes an output current detection circuit 70, described later.

The high-voltage part 66 includes a high-voltage output circuit 71 which supplies the high-voltage power, sent through the control circuit part 65, to the negative ion electrode 25 of the air cleaning unit 60. The heat exchanger 8 is grounded, and ground potential is applied to the heat exchanger 8 as the opposite electrode. The heat exchanger 8 and the output current detection circuit 70 are connected through a protective resistance (protection circuit) 72.

The output current detection circuit 70 detects a current value fed back from the heat exchanger 8 to thereby judge whether a voltage output from the high-voltage part 66 is normal or not, and, at the same time, judge whether a negative high potential output from the negative ion electrode 25 constituting the air cleaning unit 60 is normal or not.

The protective resistance 72 is constituted of, for example, a solid resistance with a high pulse resistance. The protective resistance 72 is connected between the heat exchanger 8 and the output current detection circuit 70, whereby when abnormal discharge occurs in the high-voltage part 66 or the negative ion electrode 25, noise generation is suppressed to prevent an influence from the control circuit part 65 on the indoor controller 55, and thus, to prevent malfunctions of an electrically-powered apparatus.

The invention is not limited to the above embodiments as such, and components can be modified and embodied without departing from the scope in an implementation stage. Various inventions can be formed by appropriate combinations of a plurality of components disclosed in the above embodiments.

### Industrial Applicability

According to the invention, while the heat exchanger has a dust collecting function, large dust contained in indoor air is prevented from being adhered to the negative ion electrode, whereby a high dust collecting performance can be obtained for a long period of time, resulting in so-called maintenance-free operation, whereby the user inconvenience can be reduced.

## Claims

1. An indoor unit of an air conditioner, **characterized by** comprising:
a negative ion generator which is disposed in a suction ventilation path for suctioning indoor air, comprises a negative ion electrode subjected to application of a high voltage of negative potential, and negatively charges dust contained in the indoor air circulating in the suction ventilation path;
an air filter disposed on an upstream side of the suction ventilation path of the negative ion generator; and
a heat exchanger disposed on a downstream side of the suction ventilation path of the negative ion generator,
wherein the heat exchanger has an electroconductivity for the purpose of trapping and collecting the negatively charged dust and is used as an opposite electrode of the negative ion generator to be subjected to application of a ground potential.

2. An indoor unit of an air conditioner, **characterized by** comprising:
a negative ion generator which is disposed in a suction ventilation path for suctioning indoor air, comprises a negative ion electrode subjected to application of a high voltage of negative potential, and negatively charges dust contained in the indoor air circulating in the suction ventilation path;
an air filter disposed on an upstream side of the suction ventilation path of the negative ion generator; and
a heat exchanger disposed on a downstream side of the suction ventilation path of the negative ion generator,
wherein the heat exchanger and the air filter have an electroconductivity for the purpose of trapping and collecting the negatively charged dust and are used as an opposite electrode of the negative ion generator to be subjected to application of ground potential.

3. An indoor unit of an air conditioner, **characterized by** comprising:
a negative ion generator which is disposed in a suction ventilation path for suctioning indoor air, comprises a negative ion electrode subjected to application of a high voltage of negative potential, and negatively charges dust contained in the indoor air circulating in the suction ventilation path;
an air filter disposed on an upstream side of the suction ventilation path of the negative ion generator;
a heat exchanger disposed on a downstream side of the suction ventilation path of the negative ion generator; and
an auxiliary electrode which, for the purpose of trapping and collecting dust by at least the heat exchanger, is disposed near the heat exchanger, has an electroconductivity, and is used as an opposite electrode of the negative ion generator to be subjected to application of a ground potential.

4. The indoor unit of an air conditioner according to any one of claims 1 to 3, **characterized in that** the negative ion generator comprises a negative ion electrode to which a high voltage of negative potential is applied and an opposite electrode provided to face the negative ion electrode and subjected to application of a ground potential, and
the negative ion electrode and the opposite electrode constituting the negative ion generator, the air filter, and the heat exchanger are disposed from the upstream side to the downstream side of the suction ventilation path in order of the air filter, the opposite electrode, the negative ion electrode, and the heat exchanger.

5. The indoor unit of an air conditioner according to any one of claims 1 to 3, **characterized in that** the negative ion generator is disposed on the front surface side of the heat exchanger, and an interval between the negative ion electrode and the front surface of the heat exchanger is set to 6 to 15 mm.

6. An indoor unit of an air conditioner, **characterized by** comprising:
an air filter disposed in a suction ventilation path for suctioning indoor air;
a negative ion electrode which is disposed to face the air filter, and subjected to application of a high voltage of negative potential to thereby negatively charge dust contained in the indoor air circulating the suction ventilation path; and
a heat exchanger which is disposed to face the negative ion electrode, subjected to application of a ground potential to constitute an opposite electrode to the negative ion electrode, and exchanges heat with the indoor air guided in the suction ventilation path,
wherein the air filter, the negative ion electrode, and the heat exchanger are formed to have substantially the same dimension in a width direction, and the negative ion electrode is disposed in a substantially central portion in a longitudinal direction perpendicular to the width direction of the air filter and the heat exchanger.

7. The indoor unit of an air conditioner according to claim 6, **characterized in that** the negative ion electrode comprises a plurality of needle electrodes, which are protrusively provided at a predetermined interval along the longitudinal direction, and is covered by an electrode cover which has a length projecting from the front end of the needle electrode by 7 to 15 mm and has lattices formed at an interval of 5 to 12 mm.

8. The indoor unit of an air conditioner according to claim 7, **characterized in that** the negative ion electrode and the electrode cover are integrated with each other to constitute a needle electrode unit, and one end side portion of the needle electrode unit is detachably connected to a high-voltage power supply unit for supplying a high-voltage power to the negative ion electrode.

9. The indoor unit of an air conditioner according to claim 7, **characterized in that** the electrode cover covering the negative ion electrode is opened only in a portion facing the heat exchanger.

10. An indoor unit of an air conditioner, **characterized by** comprising:
an air filter disposed in a suction ventilation path for suctioning indoor air;
a negative ion electrode which is disposed to face the air filter, and subjected to application of a high voltage of a negative potential to thereby negatively charge dust contained in the indoor air circulating the suction ventilation path;
a heat exchanger disposed to face the negative ion electrode, subjected to application of a ground potential to constitute an opposite electrode to the negative ion electrode, and exchanges heat with the indoor air guided in the suction ventilation path;
an indoor blower which is disposed on a downstream side of the suction ventilation path of the heat exchanger and performs a blowing operation;
an indoor controller which performs operation control of an electrically-powered apparatus including the indoor blower; and
a high-voltage power supply unit for supplying a high-voltage power to the negative ion electrode,
wherein the high-voltage power supply unit comprises:
a control circuit part which controls supply of power to the negative ion electrode;
a high-voltage output circuit which applies a high voltage to the negative ion electrode;
an output current detection circuit which is connected between the control circuit part and the high-voltage output circuit and detects a current value output to the negative ion electrode; and
a protective circuit which is connected between the output current detection circuit and the heat exchanger, and when abnormal discharge occurs, suppresses an influence on at least the control circuit part.
